# EUROPÄISCHE PATENTSCHRIFT

(11) **EP 2 589 525 B1**
(45) Veröffentlichungstag und Bekanntmachung des Hinweises auf die Patenterteilung: **21.09.2016**
(21) Anmeldenummer: 12189603.9
(22) Anmeldetag: 23.10.2012
(51) Int. Cl.: B62D 25/04

(54) **Karosserieträger einer Fahrzeugkarosserie, insbesondere B-Säule**
Body member of a vehicle body, in particular a B-pillar
Support de carrosserie d'une carrosserie de véhicule, notamment une colonne B

(30) Priorität: 02.11.2011 DE 102011085590
(43) Veröffentlichungstag der Anmeldung: 08.05.2013
(73) Patentinhaber: Ford Global Technologies, LLC, Dearborn, MI 48126 (US)
(72) Erfinder: Huhn, Henrik M., 40549 Düsseldorf (DE)
(74) Vertreter: Dörfler, Thomas

(56) Entgegenhaltungen:
- WO-A1-2010/071434
- DE-A1- 4 340 033
- GB-A- 632 639
- GB-A- 751 538
- US-A- 1 866 277
- US-A- 3 083 049

## Beschreibung

Die Erfindung betrifft einen Karosserieträger einer Fahrzeugkarosserie, insbesondere eine B-Säule, nach dem Oberbegriff des Anspruchs 1.

Im Karosserierohbau werden beim Zusammenbau der Flansche der Bleche üblicherweise thermische Fügeverfahren, wie Widerstandspunktschweißen, diese häufig in Kombination mit Klebverfahren, oder Laserschweißen eingesetzt. Durch den zunehmenden Einsatz von hochfesten und höchstfesten Stählen für Verstärkungsbauteile in beispielsweise A-Säule und B-Säule mit zum Teil hohen Blechdicken wird jedoch eine Verbindung mit der erheblich dünneren Außenwand schwierig. Ähnlich schwierig gestaltet sich das Verschweißen bei Mischbauweisen, wie beispielsweise Stahl/ Leichtmetallbasislegierung. Häufig lassen Blechdickenverhältnisse und Unterschiede in den Widerstandswerten der eingesetzten Materialien überhaupt keine qualitativ gute Verschweißung mittels Widerstandspunktschweißen zu, so dass häufig das apparativ wesentlich aufwendigere und schwierigere Laserschweißen zum Einsatz kommen muss. Ferner tritt bei der Verschweißung von Blechen insbesondere bei für den Karosseriebau eingesetzten warmumgeformten Stählen eine lokale Materialschwächung im aufgeschmolzenen Bereich und/oder der Wärmeeinflusszone der Schweißung auf. Dieses kann negative Effekte beim Bauteilverhalten, zum Beispiel ein plötzliches Versagen durch Einreißen bei extremen Belastungen, wie bei einem Unfall, verursachen.

Aus der GB 751 538 A ist Karosserieträger mit einem Außenblech und einem innen liegenden Blech bekannt, die randseitig über zwei Flansche aneinander anliegend miteinander verbunden sind, wobei der Flansch des einen Blechs den Flansch des anderen Blechs durch eine Falzung umgreift. Aufgrund der Formgebung der Falzverbindung ergibt sich ein im wesentlichen gerader Karosserieträger.

Aus der DE 43 40 033 A1 ist ein geschlossener Seitenaufprallträger mit über zwei Flansche verbundenen zwei Blechen und mit mindestens einem zwischen diesen Blechen liegenden Verstärkungsprofil bekannt. Die Flansche des einen Blechs umschließen die beiden Flansche des anderen Blechs durch Falzungen. Das Verstärkungsprofil wird durch die Formbgebung des Seitenaufprallträgers in diesen eingebettet. Dieser Seitenaufprallträger ist im Türbereich vorgesehen, eignet sich jedoch nicht für gekrümmte Träger und vor allem nicht für sichtbare Außenbleche.

Die US 3 083 049 A offenbart eine B-Säule mit einem Außenblech und einem Innenblech, die beide über einen randseitigen Flansche miteinander verbunden sind, wobei der Flansch des Außenblechs um den Flansch des Innenblechs gebördelt ist. Ein solcher Aufbau weist nicht die erforderliche Steifigkeit und Festigkeit auf, die an B-Säulen heutzutage gestellt werden.

Aufgabe der Erfindung ist, einen gattungsgemäßen Karosserieträger bereitzustellen, dessen Flansche unaufwendiger und Werkstoff schonender verbunden sind.

Die gestellte Aufgabe wird erfindungsgemäß durch die Merkmale der Ansprüche 1 und 2 gelöst gelöst. Vorteilhafte Weiterbildungen werden in den Unteransprüchen beschrieben.

Die gestellte Aufgabe wird bereits dadurch gelöst, dass ein Blechflansch (Innenblechflansch oder Verstärkungsblechflansch) den anderen Blechflansch zumindest abschnittsweise formschlüssig umgreift, insbesondere durch eine Bördelung oder Falzung wird andseitig zusückversetzt angeordnet ist.

Durch das formschlüssige Umgreifen wird eine thermische Belastung der Flansche vermieden. Ferner kann mit dem Umgriff des Außenblechflansches vorteilhaft eine strukturelle Versteifung an dieser Stelle geschaffen werden. Vorteilhaft können auch problemlos Bleche unterschiedlicher Blechstärken miteinander verbunden werden, die, konstruktiv, beim Außenblech und Verstärkungsblech und/oder, Werkstoff bedingt, bei Verwendung von Blechen aus Leichtmetallbasislegierungen, wie Aluminium- oder Magnesium-Basislegierungen, auftreten können. Zudem wird mit dem Umgreifen vermieden, dass im Flanschbereich die oft scharfkantigen Beschnittkanten an den Rändern der Bleche bzw. der Blechflansche freiliegen, sondern dass diese von dem nach Außen hin rundem Umschlag geschützt verdeckt werden können. Damit kann eine Verletzungsgefahr insbesondere bei Montagearbeiten im Türeinstiegsbereich des Fahrzeuges vermieden werden. Ferner kann ein eventueller vorgesehener Keder oder Dichtung leichter und, wegen Verdeckens bzw. Umbiegens der scharfkantigen randseitigen Enden der Flansche, ohne Verletzungsgefahr auf die verbundenen Flansche aufgezogen werden. Schließlich ist das Verfahren des formschlüssigen Umgreifens auch unaufwendig und kostengünstig.

Das formschlüssige Umgreifen als Verbindungsverfahren ist zudem besonders geeignet für die Mischbauweisen im Karosseriebau, wie Stahl/Aluminium, Stahl/Magnesium, Stahl/Faserverbund und Aluminium/Faserverbund. Selbst bei einer Mischbauweise mit einem Blech mit einer Kohlenstofffaser oder Glasfaser verstärkten Struktur als Verstärkungsblech oder als Außenblech kann ein derartiges Blech mittels Umgreifens eines kaltverformbaren Außenbleches bzw. Verstärkungsbleches formschlüssig mit demselben verbunden werden.

Das formschlüssige Umgreifen kann beispielsweise durch Rollfalzen erfolgen, indem die Flansche miteinander verrollt werden. Es kann auch als Umschlag in Form einer Dopplung der Dicke des Flansches erfolgen, wobei in dem Umschlag des Flansches des einen Bleches der des anderen Bleches aufgenommen ist. Dies kann auch als Bördelung oder Umbördelung bezeichnet werden. Mit dem Umgreifen kann ein Flansch zumindest abschnittsweise um den anderen oder, im Falle einer Verbindung von mehr als zwei Flanschen, beispielsweise um die übrigen Flansche so umgebogen werden und damit diesen bzw. diese seitlich so umgreifen, dass er formschlüssig beidseitig an dem umgriffenen bzw. oberseitig und unterseitig an einem Stapel an den umgriffenen Flanschen anliegt.

Indem ein Blech mittels Bördelung oder Falzung mit dem anderen Blech verbunden ist, kann eine notwendige Flanschlänge im Vergleich zu der zum Widerstandspunktschweißen notwendigen Flanschlänge deutlich reduziert werden, wodurch beispielsweise ein jeweils zugeordneter Türeinstiegsbereich konstruktiv größer ausgelegt werden kann.

In einer alternativen Ausführungsform des Karosserieträgers kann der Innenblechflansch den Außenblechflansch formschlüssig umgreifen. Dies kann notwendig sein, wenn z. B. der Außenblechflansch sich nicht zum Bördeln eignet.

Vorteilhaft zur Schwingungs- und/oder Geräuschsdämpfung kann innenseitig zwischen Außenblechflansch und den anderen Flanschen ein plastischer Werkstoff vorgesehen sein.

Zusätzlich zum formschlüssigen Umgreifen können Außenblechflansch und Verstärkungsblechflansch zumindest abschnittsweise miteinander verklebt sein. Hierdurch kann die Steifigkeit, insbesondere die Verwindungssteifigkeit, der Verbindung, weiter erhöht werden. Ferner kann eine verbesserte Geräuschdämpfung erzielt werden. Der Klebstoff kann vor dem Umbiegen des einen Flansches innenseitig zumindest abschnittsweise auf denselben auftragen werden. Mit dem Umbiegen dieses Flansches kann der Klebstoff fest gegen den anderen Flansch gepresst werden. Damit können mit dem Verkleben eventuell auftretende Zwischenräume zwischen den Flanschen im Bereich der Umbördelung bzw. des Umschlags gefüllt werden. Somit kann der ausgehärtete Kleber als elastischer Werkstoff zwischen den Blechen zur Schwingungs- und/oder Geräuschsdämpfung beitragen. Vorteilhaft wegen einer besseren Füllung der Zwischenräume kann der Klebwerkstoff ein Strukturkleber, insbesondere ein gefüllter Strukturkleber sein. Dies erhöht die Gesamtsteifigkeit und Festigkeit des Karosserieträgers weiter. Der Klebewerkstoff kann flüssig, pastös oder als vorgefertigte Klebebahn aufgetragen werden.

In einer vorteilhaften Ausbildung des Karosserieträgers kann dieser ein Innenblech mit zumindest einem Flansch zur Verbindung mit zumindest einem anderen der Bleche aufweisen.

Vorzugsweise kann die Verbindung, insbesondere die formschlüssige Verbindung mittels Umgreifens, abschnittsweise erfolgen. Der Innenblechflansch kann beispielsweise zumindest abschnittsweise gegenüber den beiden anderen Flanschen nach innen versetzt angeordnet sein. Hierbei kann der Innenblechflansch in den Bereichen, in denen er gegenüber den beiden anderen Flanschen nach Innen versetzt angeordnet ist, insbesondere mittels Laserschweißen mit dem Verstärkungsblech verbunden sein. Verstärkungsblech und Innenblechflansch können, im Gegensatz zu dem in der Regel dünneren Außenblech, ähnliche Wandstärken aufweisen, so dass eine Verbindung von Verstärkungsblech und Innenblechflansch mittels Schweißens gut herstellbar ist. Der Außenblechflansch kann hierbei, wie oben beschrieben, den Verstärkungsblechflansch seitlich formschlüssig umgreifen. Diese Verbindungskombination mit formschlüssigem Umgreifen des Außenblechflansches um den Verstärkungsblechflansch und mit Verschweißen von Verstärkungsblechflansch und Innenblechflansch ist besonders bei größeren Blechstärken von Verstärkungsblech und Innenblech von Vorteil.

In einer anderen Ausführungsform kann der Verstärkungsblechflansch zumindest abschnittsweise gegenüber den beiden anderen Flanschen nach Innen versetzt angeordnet sein. Hierbei kann der Verstärkungsblechflansch in den Bereichen, in denen er gegenüber den beiden anderen Flanschen nach Innen versetzt angeordnet ist, insbesondere mittels Laserschweißen mit dem Innenblechflansch verbunden sein. Der Innenblechflansch kann den Verstärkungsblechflansch überlappen und flächig innenseitig an dem Außenblechflansch anliegen, der ihn seinerseits mittels Umbiegens formschlüssig umschließt.

In einer bevorzugten Ausbildungsform des Karosserieträgers kann der Außenblechflansch den Verstärkungsblechflansch und/oder den Innenblechflansch zumindest abschnittsweise insbesondere mittels Umbördelns formschlüssig umgreifen. In der Ausbildung des Karosserieträgers, in der der Außenblechflansch den Innenblechflansch zumindest abschnittsweise formschlüssig umgreift, kann der Verstärkungsblechflansch gegenüber den beiden anderen Flanschen zumindest in den Abschnitten der Umbördelung des Außenblechflansches um den Innenblechflansch gegenüber den anderen Flanschen nach Innen versetzt angeordnet sein.

In einer anderen Ausführungsform des Karosserieträgers kann der Innenblechflansch abschnittsweise ausgespart sein und an nicht ausgesparten Bereichen mit dem Verstärkungsblechflansch verbunden sein. Hierbei können Innenblechflansch und Verstärkungsblechflansch miteinander verklebt sein.

Bei einer bevorzugten Ausbildung des Karosserieträgers können Außenblechflansch und Innenblechflansch zumindest abschnittsweise abwechselnd ausgespart sein. Hierbei können, mechanisch günstig, Außenblechflansch und Innenblechflansch vorzugsweise jeweils in ihren nicht ausgesparten Bereichen den Verstärkungsblechflansch abwechselnd formschlüssig umgreifen.

Der Außenblechflansch kann den Verstärkungsblechflansch und/oder den Innenblechflansch zumindest abschnittsweise formschlüssig umgreifen, insbesondere umbördeln. Hierbei ist vorgesehen, dass der Verstärkungsblechflansch und der Innenblechflansch flächig aneinander liegend angeordnet sind. Diese Ausführungsform des Karosserieträgers ist vorteilhaft, da hierdurch auf einfache Weise alle drei Flansche in einem Schritt miteinander verbunden werden können. Sie ist besonders bei Flanschen günstig einsetzbar, die eine geringere Gesamtdicke aufweisen.

Die vorliegende Erfindung wird im Folgenden anhand mehrerer in einer Zeichnung dargestellten Ausführungsformen des Karosserieträgers näher erläutert. In der Zeichnung zeigen:
- Fig. 1: eine Innenseitenansicht eines hier als B-Säule ausgebildeten Karosserieträgers ,
- Fig. 2: eine Ausschnittsvergrößerung gemäß dem in Figur 1 eingezeichneten Ausschnitt X mit seitlich mittels Umbördeln verbundenen Flanschen;
- Figuren 3a und 3b: jeweils eine Teilquerschnittsansicht des ungefalzten und des fertig gefalzten Flansches gemäß des Schnittverlaufs A-A in Figur 2;
- Figuren 4a bis 4b: jeweils eine Teilquerschnittsansicht gemäß dem Schnittverlauf A-A in Figur 2 mit alternativen Ausführungsvarianten zum Umbördeln der Flansche;
- Figuren 4c bis 4d: zeigen nicht beanspruchte Ausführungsvarianten zum Umhändeln der Flansche.
- Figuren 5a und 5b: jeweils eine Teilquerschnittsansicht gemaß dem Schnittverlauf A-A in Figur 2 das Verbinden der Flansche, alternativ zu den zwei Verfahrensschritten gemäß Figur 3;
- Fig. 6: eine Ausschnittsvergrößerung gemäß dem in Figur 1 eingezeichneten Ausschnitt X, hier mit unterschiedlichen Verbindungsbereichen;
- Figuren 7a und 7b: jeweils eine Teilquerschnittsansicht gemäß dem Schnittverlauf B-B bzw. Schnittverlauf C-C in Figur 6;
- Fig. 8: eine Teilquerschnittsansicht zu einer alternativen Flanschverbindung gemäß dem Querschnittsverlauf B-B gemäß Figur 6;

- Fig. 9: eine Seitenansicht einer Seitenwand mit ausgebildeten Karosserieträgern in den Türeinstiegsbereichen; und
- Fig. 10a bis 10d: die Schnitte durch die Karosserieträger aus Fig. 9.

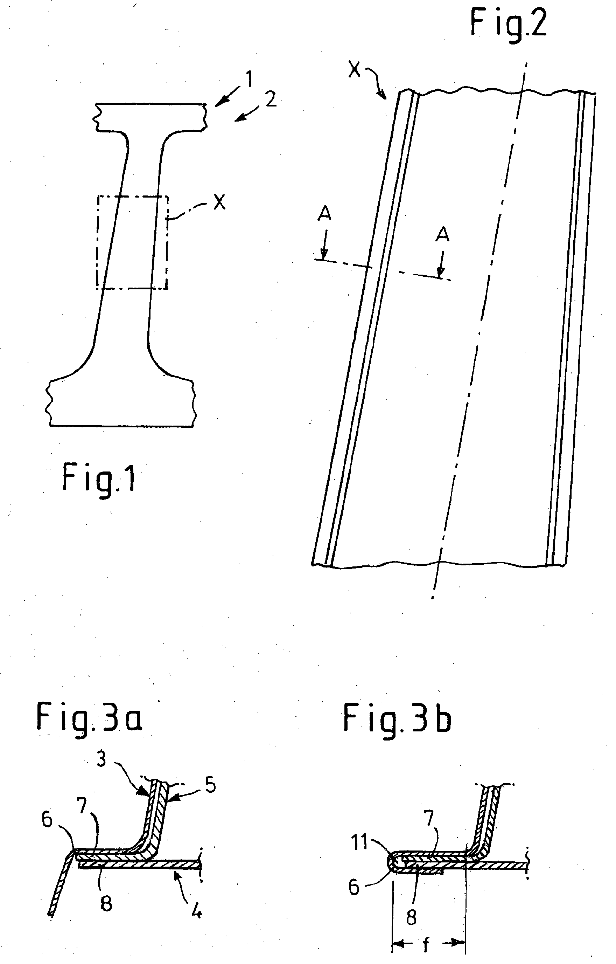

In den Figuren 1 bis 8 wird in unterschiedlichen Ansichten, Teilquerschnittsansichten und Ausschnitten ein hier als B-Säule 1 ausgebildeter Karosserieträger 2 gezeigt. Wie insbesondere den Teilquerschnittsansichten gemäß den Figuren 3, 4, 5 und 7 entnehmbar, weist der Karosserieträger 2 ein Außenblech 3, ein Innenblech 4 und ein zwischen Außenblech 3 und Innenblech 4 angeordnetes Verstärkungsblech 5 auf, wobei die Bleche 3 bis 5 randseitig über jeweilige Flansche 6-8, einen Außenblechflansch 6 des Außenblechs 3, einen Innenblechflansch 8 des Innenblechs 4 und einen Verstärkungsflansch 7 des Verstärkungsblechs 5, aneinander anliegend miteinander verbunden sind, indem z. B. der Außenblechflansch 6 zumindest den Verstärkungsflansch 7 formschlüssig umgreift.

In Figuren 3a und 3b, jeweils eine Teilquerschnittsansicht gemäß dem Schnittverlauf A-A in Figur 2, wird der Vorgang des Umgreifens, insbesondere Umbördelns, in zwei Verfahrensschritten verdeutlicht, wobei Figur 3a den zum Bördeln vorbereiteten Außenblechflansch 6 zeigt, der endseitig abgewinkelt ist. In einem weiteren Verfahrensschritt wird der Außenblechflansch 6 soweit um die aneinander anliegenden Flansche 7 und 8 gebördelt bzw. umgebogen, bis der Außenblechflansch 6 unterseitig am Innenblechflansch 8 anliegt und somit die beiden anderen Flansche 7 und 8 formschlüssig umgreift.

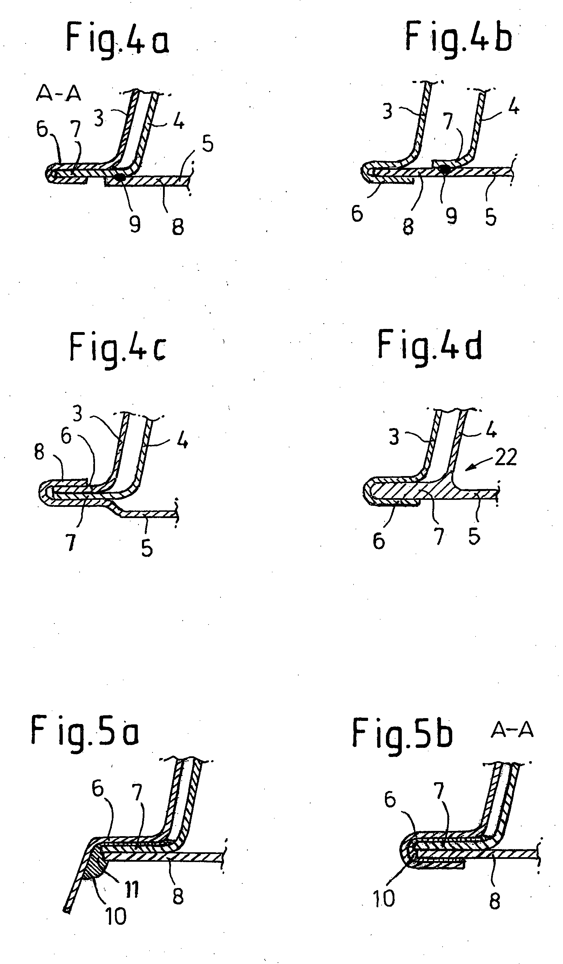

In den Figuren 4a bis 4c wird jeweils eine Ausführungsvariante anhand einer Teilquerschnittsansicht entsprechend demselben Schnittverlauf A-A gemäß Figur 2 skizziert. Wie in Figur 4a gezeigt, ist hier der Innenblechflansch 8 gegenüber den anderen Flanschen 6, 7 hier mittels vorherigen Zurückschneidens randseitig zurück versetzt angeordnet, wobei der Außenblechflansch 6 allein den Verstärkungsblechflansch 7 formschlüssig umgreift. Ferner sind Innenblechflansch 8 und Verstärkungsblechflansch 7 in Figur 4a mittels Schweißungen 9 miteinander verbunden.

In Fig. 4b ist der Verstärkungsblechflansch 7 gegenüber den anderen Flanschen 6, 8 hier mittels vorherigen Zurückschneidens randseitig zurück versetzt angeordnet, so dass der Außenblechflansch 6 allein den Innenblechflansch 8 formschlüssig umgreift. Hier sind, wie in Fig. 4a, Innenblechflansch 8 und Verstärkungsblechflansch 7 ebenfalls durch Schweißungen 9 verbunden.

In Fig. 4c sind Außenblechflansch 6 und Verstärkungsblechflansch 7 durch den Innenblechflansch 8 umgriffen. Bei dieser Variante wird der Innenblechflansch 8 nach außen umgebördelt; die Bördelrichtung ändert sich gegenüber den bisher gezeigten Varianten.

Fig. 4d zeigt die Umbördelung eines Verstärkungsblechflansches 7 durch den Außenblechflansch 6, wobei der Verstärkungsblechflansch 7 Teil eines Trägerprofils 22 ist, welches z. B. durch Hydroforming, durch Spritzgießen oder als Faserverbundbauteil entstanden ist. Verstärkungsblech 4 und Innenblech 5 sind dann integral als Teil des Trägerprofils 22 ausgeführt. Vorteilhaft ist hier die Kombination verschiedener Materialien der Blechteile möglich. Das Trägerprofil 22 kann aus einem gegossenen Aluminiumwerkstoff bestehen, während das Außenblech 3 aus Stahl besteht.

Gemäß den Figuren 5a und 5b wird eine weitere Verfahrensvariante ähnlich der in den Figuren 3 a und 3b gezeigten Verfahrensvariante zum Verbinden der Flansche 6-8 gezeigt, wobei hier die Flansche 6-8 zusätzlich miteinander verklebt werden. Hierzu wird vor dem vollständigen Umbiegen gemäß Figur 5b innenseitig auf den Außenblechflansch 5 Klebstoff 10 aufgetragen, der sich verklebend mit Umbiegen des Außenblechflanschs 5 hier oberseitig an dem Verstärkungsblechflansch 7 und unterseitig an dem Innenblechflansch 8 verteilt. Der Klebstoff 10 ist hier als Strukturkleber ausgebildet, welcher auch zum Auffüllen von Zwischenräumen 11 eingesetzt ist, wie in Figur 5b verdeutlicht.

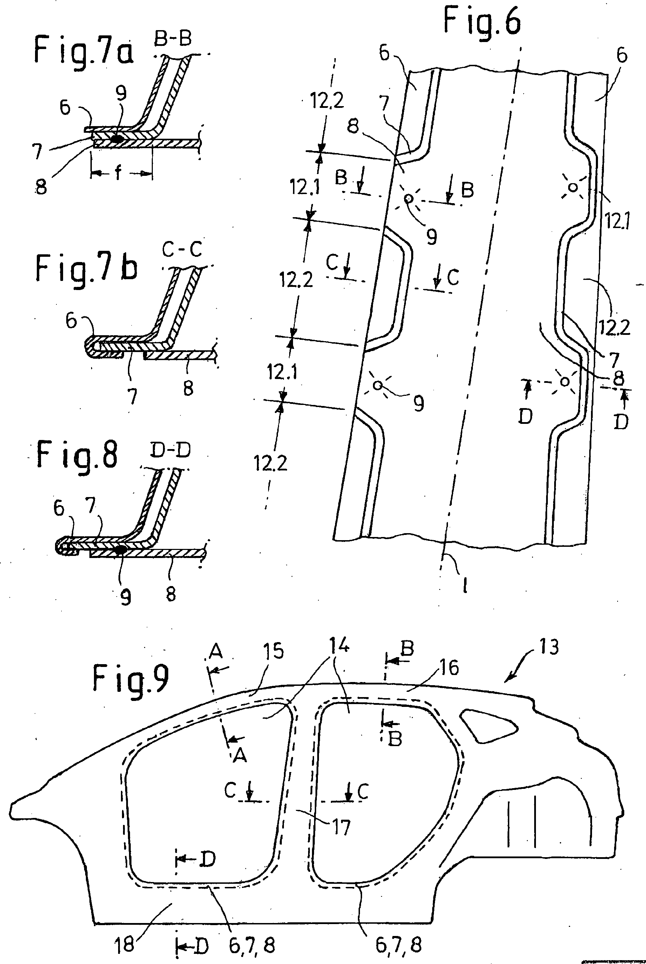

In Figur 6 ist eine Seitenansicht einer anderen Ausführungsform des hier als B-Säule 1 ausgebildeten Karosserieträgers 2 gezeigt, indem hier quer zu den Flanschen zwei verschiedene Verbindungsbereiche, ein erster Verbindungsbereich 12.1 und ein zweiter Verbindungsbereich 12.2, vorgesehen sind, die bezüglich einer Längserstreckung I der B-Säule 1 alternierend zueinander angeordnet sind. In dem ersten Verbindungsbereich 12.1 sind Verstärkungsblechflansch 7 und der Innenblechflansch 8 miteinander mittels Widerstandsschweißens verschweißt, welches der Figur 7a, einer Schnittdarstellung gemäß dem Schnittverlauf B-B mit dem einskizzierten Schweißbereich 9 verdeutlicht wird. Wie in der Schnittdarstellung in Figur 7b gemäß dem Schnittverlauf C-C ersichtlich, ist der Innenblechflansch 8 in dem zweiten Verbindungsbereich 12.2 gegenüber den anderen Flanschen 6, 7 seitlich zurück versetzt angeordnet, d.h. in dem zweiten Verbindungsbereich 12.2 ausgespart. Der Außenblechflansch 5 umgreift in dem zweiten Verbindungsbereich 12.2 den Verstärkungsblechflansch 7 formschlüssig, während der der Innenblechflansch 8 lose bleibend innenseitig an dem Verstärkungsblechflansch 7 anliegt. Dies ist wegen der Verbindung des Innenblechflanschs 8 mit dem Verstärkungsblechflansch 7 in dem ersten Verbindungsbereich 12.1 möglich. Damit sind in einer alternierenden Folge Innenblechflansch 8 mit dem Verstärkungsblechflansch 7 im ersten Verbindungsbereich 12.1 und Verstärkungsblechflansch 7 und Außenblechflansch 5 im zweiten Verbindungsbereich 12.2 miteinander verbunden. Bei einer vorgesehenen geringen Dimensionierung der Verbindungsbereiche 12.1, 12.2 wird eine rasche Abfolge dieser unterschiedlichen Verbindungen in Längsersteckung I der B-Säule 1 zwischen den Flanschen 6-8 erzielt, welches eine gute Verbindung der Flansche 6-8 insgesamt ermöglicht.

In einer weiteren Ausführungsform des Karosserieträgers 2 aus Figur 6 zeigt der Schnitt D-D, der in Figur 8 vergrößert dargestellt ist. Im Vergleich zur Ausführungsform des Karosserieträgers 2 gemäß Figur 7a ist der Innenblechflansch 8 im ersten Verbindungsbereich 12.1 gegenüber den beiden anderen Flanschen 6, 7 zurück versetzt angeordnet und mit dem Innenblechflansch 8 verschweißt, und im zweiten Verbindungsbereich 12.2 ausgespart, so dass der Außenblechflansch 6 eine längere Umgreifung aufweist. Damit wird eine durchgehende Umgreifung des Verstärkungsblechflansches 7 durch den Außenblechflansch 6 erzielt bzw. es ergibt sich eine durchgehende Bördelkante. Dies ist sowohl vorteilhaft für die Festigkeit der Verbindung als auch für den Schutz der Kante selbst für Verletzungen und für Korrosion.

Figur 9 zeigt eine Seitenansicht einer Seitenwand 13 mit mehren Karosserieträgern in den Türeinstiegsbereichen 14, in denen jeweils die oben beschriebenen unterschiedlichen Verbindungsmöglichkeiten der Flansche 6 bis 8 vorteilhaft realisiert werden können. Als erfinderische Karosserieträger sind hier ausgeführt die A-Säule 15 im Bereich der Windschutzscheibe, der Dachrahmen 16 im Bereich der hinteren Tür, die B-Säule 17 und der Seitenschweller 18.

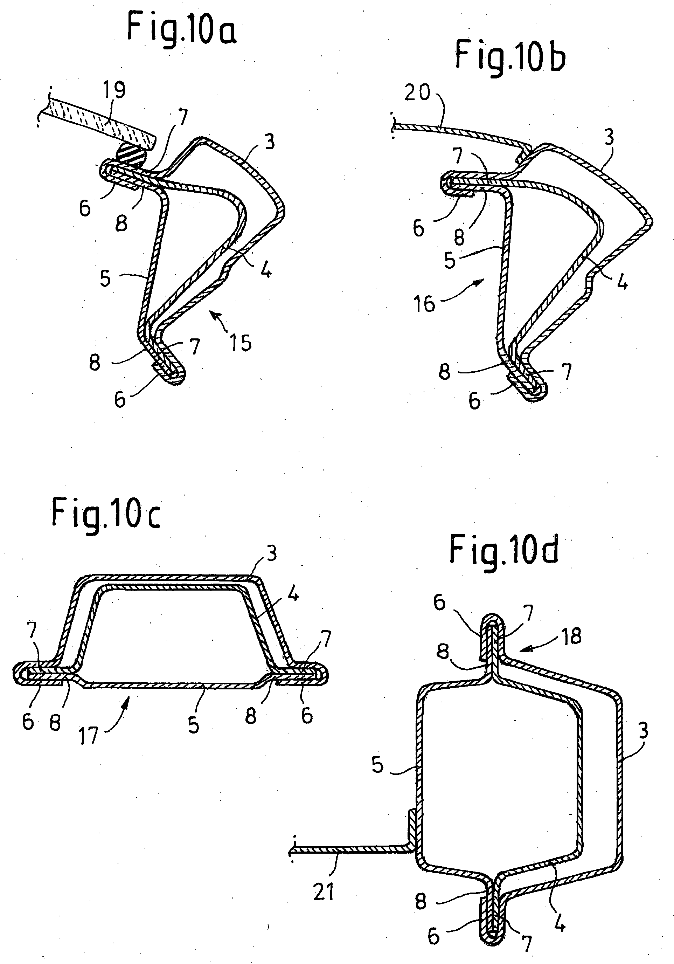

In den Figuren 10a bis 10d sind die schematischen Schnitte durch die Karosserieträger aus Fig. 9 gezeigt. In allen Fällen sind der Außenblechflansche 6 des einheitlichen Außenblechs 3 um die Verstärkungsblechflansche 7 und der Innenblechflansche 8 gebördelt. Im Unterschied zum Außenblech 3 sind hier die Verstärkungsbleche 4 und die Innenbleche 5 nicht einheitlich, sondern sind in den verschiedenen Karosserieträgern 15 bis 18 jeweils unterschiedliche Bleche.

Fig. 10a zeigt den Schnitt A-A durch die A-Säule 15 im Bereich der Windschutzscheibe 19, Fig. 10b den Schnitt B-B durch den Dachrahmen 16 mit dem Dachblech 20, Fig. 10c den Schnitt C-C durch die B-Säule 17, und Fig. 10d den Schnitt D-D durch den Seitenschweller 18 mit dem Bodenblech 21.

### Bezugszeichenliste

- 1: B-Säule
- 2: Karosserieträger
- 3: Außenblech
- 4: Innenblech
- 5: Verstärkungsblech
- 6: Außenblechflansch
- 7: Verstärkungsblechflansch
- 8: Innenblechflansch
- 9: Schweißbereich
- 10: Klebstoff
- 11: Zwischenraum
- 12.1: erster Verbindungsbereich
- 12.2: zweiter Verbindungsbereich
- 13: Seitenwand
- 14: Türeinstiegsbereich
- 15: A-Säule
- 16: Dachrahmen
- 17: B-Säule
- 18: Seitenschweller
- 19: Windschutzscheibe
- 20: Dachblech
- 21: Bodenblech
- I: Längserstreckung
- f: Flanschlänge

## Patentansprüche

1. Karosserieträger (2), insbesondere eine B-Säule (1), mit einem Außenblech (3) und einem innen liegenden Blech, die randseitig über jeweilige Flansche aneinander anliegend miteinander verbunden sind, der Flansch des einen Blechs den Flansch des anderen Blechs zumindest abschnittsweise formschlüssig umgreift, insbesondere durch eine Bördelung oder Falzung, das innen liegende Blech ein Verstärkungsblech (5) mit dem Verstärkungsblechflansch (7) ist und ein weiteres innen liegendes Blech ein Innenblech (4) mit dem Innenblechflansch (8) ist,
**dadurch gekennzeichnet, dass**
der Innenblechflansch (8) zumindest abschnittsweise gegenüber den beiden anderen Flanschen (6,7) randseitig zurückversetzt angeordnet ist und, insbesondere mittels Laserschweißen, mit dem Verstärkungsblech (5) verbunden ist.

2. Karosserieträger nach dem Oberbegriff des Anspruchs 1,
**dadurch gekennzeichnet, dass**
der Verstärkungsblechflansch (7) zumindest abschnittsweise gegenüber den beiden anderen Flanschen (6,8) randseitig zurückversetzt angeordnet ist und, insbesondere mittels Laserschweißen, mit dem Innenblech (4) verbunden ist.

3. Karosserieträger (2) nach einem der vorherigen Ansprüche,
**dadurch gekennzeichnet, dass**
der Außenblechflansch (6) und der Flansch des innen liegenden Bleches bzw. die Flansche der innen liegenden Bleche verklebt ist bzw. sind.

4. Karosserieträger nach Anspruch 1, 2 oder 3, **dadurch gekennzeichnet, dass** der Innenblechflansch (8) abschnittsweise ausgespart ist und an nicht ausgesparten Bereichen mit dem Verstärkungsblechflansch (7) verbunden ist.

5. Karosserieträger nach Anspruch 4, **dadurch gekennzeichnet, dass** der Außenblechflansch (6) den Verstärkungsblechflansch (7) zumindest teilweise in den Bereichen umgreift, in denen der Innenblechflansch (8) ausgespart ist.

6. Seitenwand eines Kraftfahrzeuges mit einem Karosserieträger nach einem der vorherigen Ansprüche, **dadurch gekennzeichnet, dass** der Karosserieträger im Türausschnitt angeordnet ist.

7. Seitenwand nach Anspruch 6, **dadurch gekennzeichnet, dass** zumindest ein formschlüssig umgreifender Flansch des Karosserieträgers eine Türdichtung aufnimmt.

## Claims

1. Body member (2), in particular a B-pillar (1), having an outside panel (3) and an enclosed panel, which laterally are contiguously connected together by way of respective flanges, the flange of the one panel wraps around the flange of the other panel to form a positive interlock at least in some sectors, in particular through flanging or seaming, the enclosed panel is a stiffening plate (5) having the stiffening plate flange (7) a further enclosed panel is an inside panel (4) having the inside panel flange (8), **characterized in that** the inside panel flange (8), at least in some sectors, is arranged laterally set back relative to the other two flanges (6,7) and is connected to the stiffening plate (5), in particular by means of laser welding.

2. Body member according to the preamble of Claim 1, **characterized in that** the stiffening plate flange (7), at least in some sectors, is arranged laterally set back from the other two flanges (6,8) and is connected to the inside panel (4), in particular by means of laser welding.

3. Body member (2) according to either of the preceding claims, **characterized in that** the outside panel flange (6) and the flange of the enclosed panel or the flanges of the enclosed panels is or are adhesively bonded.

4. Body member according to Claim 1, 2 or 3, **characterized in that** the inside panel flange (8) is recessed in some sectors and is connected to the stiffening plate flange (7) in non-recessed areas.

5. Body member according to Claim 4, **characterized in that** the outside panel flange (6) wraps at least partially around the stiffening plate flange (7) in the areas in which the inside panel flange (8) is recessed.

6. Side wall of a motor vehicle having a body member according to one of the preceding claims, **characterized in that** the body member is arranged in the door opening.

7. Side wall according to Claim 6, **characterized in that** at least one flange of the body member wrapping to form a positive interlock receives a door seal.

## Revendications

1. Support de carrosserie (2), en particulier un montant central (1), comportant une tôle externe (3) et une tôle située à l'intérieur, qui sont reliées de manière adjacente l'une à l'autre sur leurs bords par l'intermédiaire de brides respectives, la bride de l'une des tôles entourant au moins par sections par complémentarité de forme la bride de l'autre tôle, en particulier au moyen d'un rabattement ou d'un repliement, la tôle située à l'intérieur est une tôle de renforcement (5) comportant la bride de tôle de renforcement (7) et une autre tôle située à l'intérieur est une tôle interne (4) comportant la bride de tôle interne (8),
**caractérisé en ce que** la bride de tôle interne (8) est disposée de manière reculée au moins par sections par rapport aux deux autres brides (6, 7) et est reliée à la tôle de renforcement (5), en particulier par soudage au laser.

2. Support de carrosserie selon le préambule de la revendication 1,
**caractérisé en ce que** la bride de tôle de renforcement (7) est disposée de manière reculée au moins par sections sur son bord par rapport aux deux autres brides (6, 8) et est reliée à la tôle interne (4), en particulier par soudage au laser.

3. Support de carrosserie (2) selon l'une quelconque des revendications précédentes,
**caractérisé en ce que** la bride de tôle externe (6) et la bride de la tôle située à l'intérieur ou la bride de la tôle située à l'intérieur est ou sont collée(s).

4. Support de carrosserie selon la revendication 1, 2 ou 3, **caractérisé en ce que** la bride de tôle interne (8) est évidée au moins par sections et est reliée au niveau de régions non évidées à la bride de tôle de renforcement (7).

5. Support de carrosserie selon la revendication 4, **caractérisé en ce que** la bride de tôle externe (6) entoure au moins partiellement la bride de tôle de renforcement (7) dans les régions dans lesquelles la bride de tôle interne (8) est évidée.

6. Paroi latérale d'une véhicule automobile comportant un support de carrosserie selon l'une quelconque des revendications précédentes, **caractérisé en ce que** le support de carrosserie est disposé dans la baise de porte.

7. Paroi latérale selon la revendication 6, **caractérisée en ce qu'**au moins une bride circonférentielle à complémentarité de forme du support de carrosserie reçoit un joint de porte.
